# EUROPEAN PATENT APPLICATION

(11) **EP 0 873 680 A1**
(43) Date of publication of application: **28.10.1998**
(21) Application number: 98201078.7
(22) Date of filing: 06.04.1998
(51) Int. Cl.: A01G 7/06

(54) **Method for colouring flowers, and thus coloured flowers**

(30) Priority: 07.04.1997 NL 1005748
(71) Applicant: Hofstede, Wilhelmus Johannes, 6852 BB Huissen (NL)
(72) Inventor: Hofstede, Wilhelmus Johannes, 6852 BB Huissen (NL)
(74) Representative: Smulders, Theodorus A.H.J., Ir.

(57) **Abstract**

The invention relates to a method for effecting a colour change in a plant which at least comprises a pigment of the class of anthocyanins, in which method a solution of a colour-changing compound is applied at least to the part of the plant for which the colour change is desired. The invention further relates to plants thus treated, as well as the use of a solution of a colour-changing compound for locally changing the colour of an anthocyanin-containing plant.

## Description

The invention relates to a method for colouring flowers. More in particular, the invention relates to a method in which anthocyanin-containing flowers are treated such that the flower shows a colour change permanent over the flowering time.

The anthocyanins form a class of pigments that are responsible for the greater part of the red, purple and blue colours in flowers and fruits of the higher plants. Anthocyanins are pigments soluble in sap, which pigments are contained in cell vacuoles. Examples of anthocyanins are pelargonidin glycosides occurring in geraniums, cyanidin-3-rutinoside occurring in, e.g., snapdragons, cyanidin-3-galactoside occurring in, e.g., the rind of apples, malvidin glycosides, peonidin glycosides, delphinidin glycosides occurring in, e.g., hydrangeas, and coumaryl petudinin glycosides occurring in, e.g., grapes and petunias.

From a chemical viewpoint, these pigments belong to the class of flavenoids. In particular, the anthocyanins are glycosides which after acid hydrolysis give sugars and coloured aglycons (e.g. cyanidin, malvidin, peonidin, delphinidin, pelargonidin etc.). These aglycons usually have another colour than the glycosilated compounds.

The anthocyanins therefore contain sugar groups. These sugar groups are responsible for the solubility in sap, and more in general in water, and for the stability of the pigments. The aglycons are hardly, if at all, water-soluble and are less stable than the glycoside-containing pigments.

In this specification and the appended claims the term "anthocyanin" is understood to mean both the anthocyanins and the complexes and derivatives thereof, which compounds function as pigments.

The actual colour of these pigments in plants depends on the acidity (pH) and/or other ingredients of the cell sap in which they are contained. Cyanin is, e.g., red under acid conditions (pH below 4), violet at a neutral pH and blue at an alkaline pH. Furthermore, different anthocyanin metal complexes, and in particular anthocyanin iron and anthocyanin aluminium complexes have been demonstrated.

Both the acidity or the degree of alkalinity and the complex forming with metals give possibilities to control or check the coloration of, in particular, flowers.

The present invention will be described in more detail by means of the delphinium pigments occurring in hydrangeas. This detailed description is not limitative; corresponding effects occur with other anthocyanin-containing plants. Reference is made to, e.g., iron(III) and aluminium complexes of the anhydro base of cyanin in cornflowers.

Thus, for instance, it is generally known that the flowers of hydrangeas, depending on the acidity of the soil, have a pink or blue colour. Moreover, it is conventional that about 2 months before the bloom of hydrangeas growers put aluminium compounds, in particular potassium alum, aluminium sulphate and ammonium alum, into the potting soil to obtain blue flowers instead of pink. This colour change is caused by the fact that in the presence of trivalent aluminium ions pink delphinium pigments form blue delphinium metal complexes. This desired colour change, which remains essentially constant over the flowering time, requires per plant about 7-12 g trivalent aluminium cation-supplying salts. A drawback of this method is that the aluminium salts are largely rinsed out and are thus highly detrimental to the environment. Moreover, this method does not always give the desired result, which drawback is referred to by those skilled in the art as "dirty colours". In particular, the colour purity highly depends on a soil acidity to be closely adjusted within a narrow range.

According to the invention a method has now been found in which substantially smaller amounts of chemicals, and in particular acidity-influencing compounds and metal compounds, are used, and in which the problem of dirty colours is prevented, at least highly limited. Moreover, the method according to the invention renders it possible to colour individual flowers of a plant and to partially colour flowers.

The above is obtained by applying the compounds or ions responsible for the colour change to the plant not via the soil but to those plant parts for which the complete or incomplete colour change is desired.

More in detail, the invention relates to a method for effecting a colour change in a plant which at least comprises a pigment of the class of anthocyanins, in which method a solution of a colour-changing compounds is applied to at least the part of the plant for which the colour change is desired.

This treatment is carried out selectively on plant parts that are located above the soil. This has the important advantage that a substantially smaller amount of colour-changing compound is sufficient, even if the colour-changing compound is used in a (locally) higher concentration. Moreover, a substantially smaller amount of that compound finds its way into the environment, both because absolutely less compound is rinsed out and because absolutely less compound is absorbed by the plant, which amount finds its way into the environment after decomposition of the plant.

In addition, it is a great advantage that the gradation in colour can be determined by metering and time of application. By applying the colour-changing compound to specific parts of a plant in exactly measured concentrations, the colour intensity can be influenced. Moreover, it is thus rendered possible to have the colour change take place less dependently on the acidity of the soil, so that the problem of dirty colours occurs less. It is further possible with the method according to the invention to effect the colour change substantially more shortly before delivery of the plants. While for hydrangeas the addition of aluminium compounds to the potting soil must take place at least 2 months before the delivery, the colour change can be delayed until three weeks before delivery with the method according to the invention. To the grower, this is advantageous, in particular when the demand for a plant with flowers in a specific colour changes in the course of the season.

The colour-changing compound to be used in the method according to the invention may in principle be every acidity-changing or anthocyanin-complexing compound can be used in a concentration or amount in which the colour change occurs. It is only essential that the compound is absorbed by the part of the plant to which it is applied, so that the cell vacuoles are reached. The acidity-changing and complexing compounds are known to those skilled in the art, partly because these compounds may be essentially the same compounds as those hitherto applied via the potting soil to obtain a colour change.

In a preferred embodiment a water-soluble metal salt is used, preferably an aluminium salt or an iron(III) salt. Excellent results are obtained by using potassium alum, ammonium alum, sodium alum and sulphates and nitrates of the metal ions which complex with anthocyanins and then give a colour change.

The part of the plant treated with the method according to the invention already shows a colour change when treated with an aqueous solution of the metal salt, which solution preferably contains at least 0.1 g/l metal salt and less than 50 g/l metal salt, usually less than 25 g/l metal salt, and preferably an amount of 1-15 g/l metal salt. Converted to amounts of metal salt per plant, this means a few tenths of grams per plant, while according to the known method about 10 g per plant was required. Where the introduction of metal salts via the soil is largely determined by nature, the method according to the invention renders it possible to obtain a better controllable result, because of which this technique can be easily used by a private individual as well. This last aspect is an advantage when the method is used for perennials, since the method must be repeated before each flowering period. Moreover, a method according to the invention can be used both inside and outside.

In another embodiment the colour-changing compound used is a compound which changes the pH in the part of the plant to which it is applied. Examples of such compounds are Lewis acids and Lewis bases. These compounds are chiefly used in the same amounts as indicated above for the metal salts.

As stated above, an anthocyanin can hydrolyse through acid, during which an aglycon can be formed. Aglycons are less stable than glycosilated anthocyanins, so that the colour change may be less stable as well. Moreover, acidity differences in different plant parts are usually equilibrated with time, as a result of which a colour change can be eliminated again after some time. For specific uses, in particular the use with cut flowers, it is no problem, however, to effect the colour change with an acidity change.

The solution with the colour-changing compound therein can be applied to the plant in different manners. Preferably, this is done by dabbing, sprinkling or immersing.

Depending on the employed application technique, a limited part of the plant, e.g. one or more flowers or even parts of flowers, inflorescences, umbels or racemes of flowers, can be coloured. In the known application via the potting soil such limited colorations are not possible. When partly colouring a flower, it is possible according to the invention to introduce a sharply defined colour area, which is also not possible with the known application via the potting soil. Should any colour transition occur at all during application via the potting soil, this always occurs gradually.

In a second aspect the invention relates to a plant comprising at least one flower obtainable according to the method according to the invention. This plant is not distinguishable from a plant not treated according to the invention, inter alia, in that in different plant parts different concentrations of the colour-changing compound can be demonstrated. As indicated above, the colour change is coupled to a specific flowering period. No continuously changing plant is formed after carrying out the method according to the invention. In other words, only a temporary effect is obtained.

In a plant according to the invention only part of the flowers or of the racemes or umbels of flowers or only part of a number of the flowers are treated with the method according to the invention. In particular when only part of a flower is treated, the sharply defined colour change is remarkable.

In a preferred embodiment the plant according to the invention is a hydrangea and preferably a hydrangea treated with an aqueous solution of an aluminium compound.

Finally, the invention relates to the use of a solution of a colour-changing compound for locally changing the colour of an anthocyanin-containing plant.

The invention will now be explained by means of the following non-limitative example and the description of the drawings in which:
Fig. 1 shows a flower treated with a method according to the invention;
Fig. 2 shows an umbel of flowers, sprinkled with a method according to the invention; and
Fig. 3 shows a plant, such as a hydrangea, in which only one umbel of flowers is sprinkled with a method according to the invention.

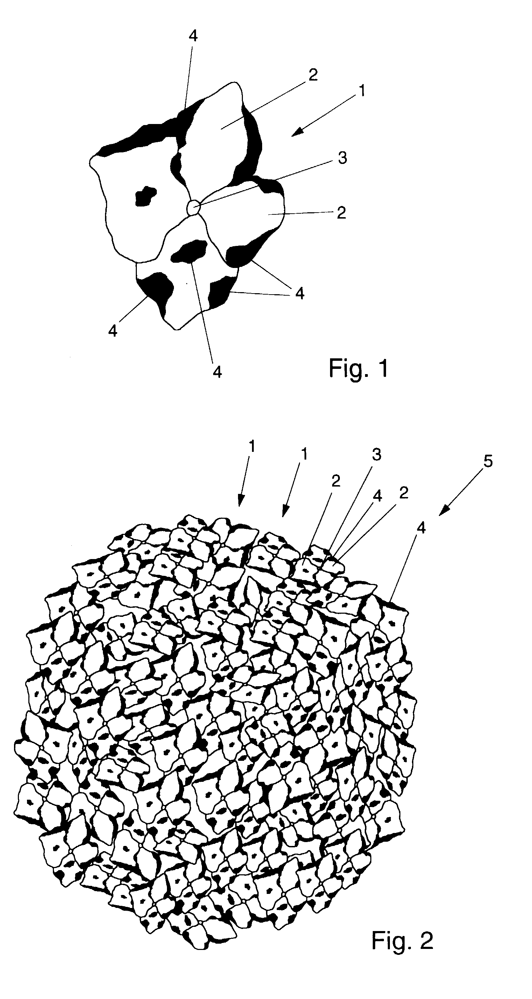

A flower 1 shown in Fig. 1 comprises four substantially violet or pink coloured petals 2, around a yellow heart 3. The petals 2 are sprinkled, individually or all together, with an aqueous solution of a colour-changing compound, such as a metal salt. By sprinkling the solution on the petals 2, a colour change has occurred in, at least on parts of the petals 2. These parts 4 are coloured, e.g., blue or violet and are rather sharply defined against the other parts.

Fig. 2 shows a raceme or umbel 5 of flowers 1 of the type shown in Fig. 1. As is apparent, such an umbel 5 gives a picture varied in colour and pattern, so that the outer appearance of the umbel 5 and, accordingly, of the plant in question is improved, becomes more attractive. Moreover, any desired number of umbels 5 of flowers and individual flowers 1 can thus be embellished. The degree of coloration of the flowers can be influenced by, e.g., the concentration of the solution, the intensity of the contact between the flower 1 and the solution, the acidity of the solution and/or the flower and the selected colour-changing compound. Thus, the intensity of the contact can be increased by, e.g., applying the solution to the flowers by smearing or dabbing or such direct techniques, while, moreover, stencilling could be implemented to enhance the gradations in colour.

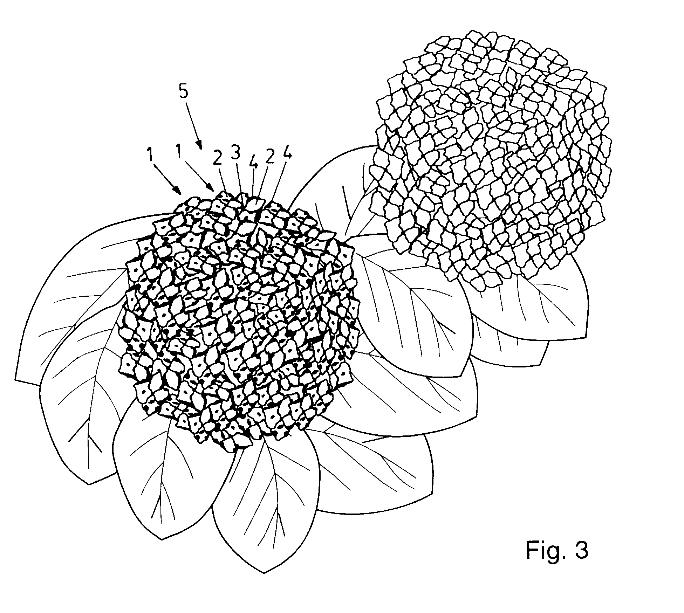

Fig. 3 shows a view of a plant fully treated by sprinkling with a solution according to the invention, at least the flowers thereof. All umbels 5 are then touched by the solution, at least locally, and give a graded colour pattern. Incidentally, all umbels or racemes of flowers of a plant can also be coloured by immersing in a solution according to the invention, so that at least substantially complete coloration of the immersed flowers is obtained.

An example of the use of a method according to the invention will be described below, which example should in no way be understood as limitative.

### Example

There was prepared an aqueous solution of aluminium sulphate (2 g/l). This solution was (1) distributed with a sprinkling device over a hydrangea with pink flowers; (2) distributed with a sprinkling device over a flower of a hydrangea with pink flowers. Besides, (3) the pink flowers of a hydrangea were immersed in the solution.

The results of (1) and (2) appear from the enclosed Figures 2 and 3. Remarkable is the sharply defined colour change, during which the parts of the flowers that have come into contact with the aluminium sulphate solution have turned blue. The result of (3) was a hydrangea with flowers completely coloured blue.

## Claims

1. A method for effecting a colour change in a plant which at least comprises a pigment of the class of anthocyanins, in which method a solution of a colour-changing compound is applied at least to the part of the plant for which the colour change is desired.

2. A method as claimed in claim 1, in which the colour-changing compound applied is a water-soluble metal salt, preferably an aluminium salt of an iron(III) salt.

3. A method as claimed in claim 2, in which the part of the plant is treated with an aqueous solution of the metal salt, which solution contains less than 50 g/l metal salt.

4. A method as claimed in claim 1, in which the colour-changing compound applied is a compound which changes the pH in the part of the plant to which it is applied.

5. A method as claimed in claim 4, in which the colour-changing compound applied is a Lewis acid.

6. A method as claimed in any of the preceding claims, in which the colour-changing compound is applied to the part of the plant by sprinkling, smearing or dabbing.

7. A plant comprising at least one flower, obtainable according to the method as claimed in any of the preceding claims.

8. A plant as claimed in claim 7, in which only part of the flowers is treated according to the method as claimed in any of claims 1-6.

9. A plant as claimed in claim 7 or 8, in which only part of the flower is treated according to the method as claimed in any of claims 1-6.

10. A plant as claimed in any of claims 7-9, which is a hydrangea.

11. A use of a solution of a colour-changing compound by locally changing the colour of an anthocyanin-containing plant.
